# EUROPEAN PATENT APPLICATION

(11) **EP 4 576 247 A1**
(43) Date of publication of application: **25.06.2025**
(21) Application number: 24221928.5
(22) Date of filing: 19.12.2024
(51) Int. Cl.: H01M 4/133, H01M 4/134, H01M 4/36, H01M 4/38, H01M 4/587, H01M 4/02

(54) **ANODE ACTIVE MATERIAL FOR LITHIUM SECONDARY BATTERY AND MANUFACTURING METHOD THEREOF**

(30) Priority: 20.12.2023 KR 20230187339
(71) Applicant: SK On Co., Ltd., Seoul 03161 (KR)
(72) Inventor: MOON, Joon Hyung, 34124 Daejeon (KR); CHUNG, Ju Ho, 34124 Daejeon (KR); PARK, Gwi Ok, 34124 Daejeon (KR)
(74) Representative: Stolmár & Partner Patentanwälte PartG mbB

(57) **Abstract**

An anode active material for a lithium secondary battery according to the present disclosure includes a porous carbon-based particle including pores. The anode active material for a lithium secondary battery includes a composite coating which is formed on a surface of the porous carbon-based particle, and includes a silicon element and at least one additional element from the group consisting of group 13 elements and group 15 elements. A weight ratio of the additional element to a weight of the silicon element included in the composite coating is 0.01% to 4%. The electrical characteristics and lifespan characteristics of the lithium secondary battery may be improved by including the additional element in a predetermined range of contents.

## Description

### [BACKGROUND OF THE INVENTION]

### 1. Field of the Invention

The disclosure of the present application relates to an anode active material for a lithium secondary battery and an anode including the same, and more specifically, to an anode active material for a lithium secondary battery including a coating and an anode including the anode active material.

### 2. Description of the Related Art

A secondary battery is a battery which can be repeatedly charged and discharged. With rapid progress of information and communication, and display industries, the secondary battery has been widely applied to various portable electronic telecommunication devices such as a camcorder, a mobile phone, a laptop computer as a power source thereof. In addition, recently, a battery module or a battery pack including the secondary batteries has also been developed and applied as a power source for an eco-friendly automobile.

For example, the secondary battery may include: an electrode assembly including a cathode, an anode and a separation membrane (separator); and an electrolyte solution in which the electrode assembly is impregnated. The secondary battery may further include an outer case in which the electrode assembly and the electrolyte solution are housed. The secondary battery may be classified into a coin-shaped, square-shaped, cylindrical-shaped, or pouch-shaped secondary battery depending on the shape of the outer case.

The anode may use a carbon-based active material or a silicon-based active material as the anode active material. A secondary battery using the carbon-based active material has relatively lower capacity and output performance and higher stability than a secondary battery using the silicon-based active material. Therefore, attempts are being made to improve electrical characteristics and lifespan characteristics of the secondary battery by using the carbon-based active material and the silicon-based active material together.

However, when including the silicon-based active material, cracks may occur due to a high volume expansion rate of silicon or a difference in volume expansion rates between the carbon-based active material and the silicon-based active material, thereby the anode active material may be exposed to the electrolyte. Accordingly, the lifespan characteristics of the secondary battery may be decreased.

### [SUMMARY OF THE INVENTION]

An object of the present disclosure is to provide an anode active material for a lithium secondary battery having improved electrical characteristics and stability.

Another object of the present disclosure is to provide an anode for a lithium secondary battery having improved electrical characteristics and stability.

In addition, another object of the present disclosure is to provide a lithium secondary battery having improved electrical characteristics and stability.

Further, another object of the present disclosure is to provide a method for manufacturing an anode active material for a lithium secondary battery having improved electrical characteristics and stability. To achieve the above objects, according to an aspect of the present invention, there is provided an anode active material for a lithium secondary battery. The anode active material includes: a porous carbon-based particle including pores; and a composite coating which is formed on a surface of the porous carbon-based particle, and includes a silicon element and at least one additional element from the group consisting of group 13 elements and group 15 elements. A weight ratio of the additional element to a weight of the silicon element included in the composite coating is 0.01% to 4%.

According to exemplary embodiments, a weight ratio of the silicon element to a total weight of the anode active material may be 30% to 70%.

According to exemplary embodiments, the composite coating may include the group 13 element, and a weight ratio of the group 13 element to the weight of the silicon element may be 0.01% to 2.5% by weight.

According to exemplary embodiments, the composite coating may include the group 15 element, and a weight ratio of the group 15 element to the weight of the silicon element may be 0.01 wt% to 4.0 wt%.

According to exemplary embodiments, the group 13 element may include at least one selected from the group consisting of B, Al, Ga, In and Tl, and the group 15 element may include at least one selected from the group consisting ofN, P, As, Sb and Bi.

According to exemplary embodiments, the porous carbon-based particle has a specific surface area of 1,000 m²/g to 2,000 m²/g.

According to exemplary embodiments, the pores included in the porous carbon-based particles have an average pore diameter of 1 nm to 20 nm.

According to exemplary embodiments, the composite coating may be formed inside the pores included in the porous carbon-based particles and on an outer surface of the porous carbon-based particles.

According to exemplary embodiments, the composite coating may include at least one of the group 13 elements and at least one of the group 15 elements.

According to exemplary embodiments, the additional element may be included as a dopant of the composite coating.

In addition, according to another aspect of the present invention, there is provided an anode for a lithium secondary battery, including: an anode current collector, and an anode active material layer disposed on at least one surface of the anode current collector and including the anode active material according to the above-described embodiments.

Further, according to another aspect of the present invention, there is provided a lithium secondary battery, including: the anode according to the above-described embodiments; and a cathode disposed to face the anode.

Furthermore, according to another aspect of the present invention, there is provided a method for manufacturing an anode active material for a lithium secondary battery. In the method, porous carbon-based particles including pores are prepared. A silicon source and at least one additional element source from the group consisting of group 13 elements and group 15 elements are vapor-deposited on the porous carbon-based particles to form a composite coating. A ratio of an injection volume of the additional element source to an injection volume of the silicon source is 0.1% to 2%.

According to exemplary embodiments, the additional element source may include the group 13 element, and a volume ratio of the additional element source to the silicon source may be 0.1% to 1%.

According to exemplary embodiments, the additional element source may include the group 15 element, and a volume ratio of the additional element source to the silicon source may be 0.1% to 2%. A volume expansion rate of the anode active material for a lithium secondary battery according to the embodiments of the present disclosure may be controlled, thereby improving the ionic conductivity and stability. The conductivity of the silicon element in the anode active material for a lithium secondary battery according to exemplary embodiments may be improved and the volume expansion may be alleviated, thereby improving electrical characteristics and lifespan characteristics of the lithium secondary battery. A volume expansion rate of the silicon element can be effectively suppressed.

### [BRIEF DESCRIPTION OF THE DRAWINGS]

FIG. 1 is a schematic enlarged view illustrating the structure of an anode active material according to exemplary embodiments, and
FIGS. 2 and 3 are a schematic plan view and a cross-sectional view illustrating a lithium secondary battery according to exemplary embodiments, respectively.

### [DETAILED DESCRIPTION OF THE INVENTION]

Hereinafter, preferred embodiments of the present disclosure will be described in detail with reference to the accompanying drawings.

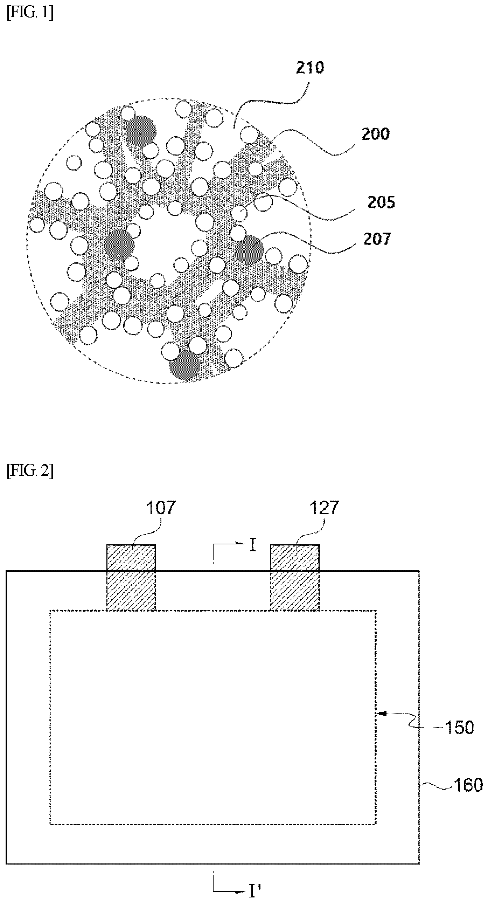

FIG. 1 is a schematic enlarged view illustrating the structure of an anode active material according to exemplary embodiments.

Referring to FIG. 1, a porous carbon-based particle 200 may include pores 210. Silicon elements 205 and additional elements 207 may be included in the pores 210 of the porous carbon-based particle 200 or the surface of the porous carbon-based particle 200.

The porous carbon-based particle 200 corresponds to a porous structure, and the silicon elements 205 and the additional elements 207 may be included in the pores 210. Accordingly, even if volume expansion and contraction of the silicon elements occur due to charging and discharging of the secondary battery, a change in the structure of the anode active material is small, such that cracks of the anode active material may be suppressed.

According to exemplary embodiments, the anode active material may exhibit a core-shell structure.

For example, the anode active material may have: a core including the porous carbon-based particles 200; and a shell structure included in at least a portion of an outer surface of the core and including the silicon elements 205 and the additional elements 207.

For example, a core-shell structure may be formed by depositing the silicon elements 205 and the additional elements 207 on the core including the porous carbon-based particles 200.

According to exemplary embodiments, the core may have an average particle diameter (D₅₀) of 1 to 100 µm.

According to exemplary embodiments, the shell may have an average thickness of 0.01 nm to 100 nm.

According to exemplary embodiments, the shell may have an average thickness of 0.1 nm to 100 nm, or 0.1 nm to 50 nm.

Within the above average thickness range, the volume expansion alleviation of the silicon elements through the additional elements may be implemented.

According to exemplary embodiments, the silicon elements 205 and the additional elements 207 may exist with being deposited on the surface of the core, and may exist with being inserted into an inside of the core to be included in the pores of the porous carbon-based particle 200.

In some embodiments, the silicon elements 205 and the additional elements 207 may be distributed continuously or discontinuously on the surface of the core.

For example, the silicon elements 205 may be distributed continuously on the surface of the core, and the additional elements 207 may be distributed discontinuously on the surface of the core. For example, the silicon elements 205 and the additional elements 207 may be distributed discontinuously on the surface of the core.

Through the core-shell structure, it is possible to suppress cracks of the anode active material due to a difference in volume expansion rates between the silicon element and the additional element.

For example, when the anode active material is not the core-shell structure, cracks of the anode active material may occur due to the difference in the volume expansion rates between the respective elements. Therefore, the lifespan characteristics of the secondary battery may be decreased.

For example, when the core of the anode active material is formed by a silicon-based active material, the volume expansion rate (e.g., 150% or less) of carbon corresponds to less than the volume expansion rate (e.g., 400% or less) of silicon, such that the silicon-based active material core may be expanded in the charging and discharging process, such that cracks may occur. In addition, regardless of the ratio of the respective elements (e.g., silicon, carbon, a group 13 element, and a group 15 element) included in the anode active material, cracks may occur, such that the lifespan characteristics of the secondary battery may be decreased.

For example, the porous carbon-based particle 200 may include at least one selected from the group consisting of activated carbon, carbon nanotubes (CNTs), carbon nano-wires, graphene, carbon fibers, carbon black, graphite, micro/meso/macro porous carbon, pyrolyzed cryogel, pyrolyzed xerogel and pyrolyzed aerogel.

According to exemplary embodiments, the porous carbon-based particle 200 may include an amorphous or crystalline structure.

In one embodiment, the porous carbon-based particle 200 may include an amorphous structure. Durability of the anode active material may be improved through the porous carbon-based particles having an amorphous structure, and thereby the lifespan characteristics of the secondary battery may be improved.

According to exemplary embodiments, the porous carbon-based particle 200 may include internal voids in which the silicon element 205 and the additional element 207 are not formed. Due to the internal voids, cracks of the anode active material may be suppressed even if the volume of the silicon element 205 and the additional element 207 expands.

According to exemplary embodiments, the porous carbon-based particle 200 may have a pore size of 20 nm or less, or 0.1 nm to 20 nm.

According to exemplary embodiments, the porous carbon-based particle 200 may have a specific surface area of 100 m²/g to 2,000 m²/g, 500 m²/g to 2,000 m²/g, or 1,000 m²/g to 2,000 m²/g.

Within the above range, even if the silicon elements 205 and the additional elements 207 deposited on the surface of the porous carbon-based particle 200 are expanded, the volume change rate of the anode active material may be reduced. Accordingly, the exposure of the anode active material to the electrolyte may be reduced, and the lifespan characteristics of the secondary battery may be improved.

The silicon element 205 may be formed in the pores or surface of the porous carbon-based particle 200. For example, the silicon element 205 may be deposited inside the structure of the porous carbon-based particle 200 to be included in the pores 210, or included in the form of being deposited on the surface of the porous carbon-based particle 200.

According to exemplary embodiments, the silicon elements 205 may be formed on an outer surface and an inner surface of the porous carbon-based particle 200.

The outer surface may refer to a portion having a thickness of up to 20 nm in a direction from the surface of the porous carbon-based particle toward a center of the particle. For example, the outer surface may be included in the shell, and the outer surface may correspond to a portion of an outer surface of the shell.

The inner surface may refer to an inner portion of the porous carbon-based particle except for the outer surface. For example, the inner surface may refer to a surface included in the core and shell, and formed by pores included in the core and the shell.

In one embodiment, an inner surface content of the silicon element 205 formed in the porous carbon-based particle 200 may be greater than an outer surface content. For example, 60% or more of a total weight of the silicon element 205 included in the anode active material may be formed on the inner surface. 40% or less of the total weight of the silicon element 205 included in the anode active material may be formed on the outer surface.

The silicon element may include, for example, unbound silicon element (Si), SiOx (0<x<2), silicon carbide (SiC), etc.

According to exemplary embodiments, the silicon element 205 may be included in an amorphous form.

According to exemplary embodiments, the silicon element 205 may be silicon element (Si) which is not bonded with oxygen and carbon. For example, the silicon element (Si) which is not bonded with oxygen and carbon may be included by a method for manufacturing an anode active material to be described below.

The silicon element may promote intercalation and deintercalation of lithium ions, thereby improving the electrical characteristics of the secondary battery.

According to exemplary embodiments, the silicon element may not be chemically bonded with the porous carbon-based particle 200.

Accordingly, volume expansion of the silicon may occur in a form in which the pores of the porous carbon-based particle are filled, and cracks of the anode active material may be suppressed. In addition, a solid electrolyte interphase (SEI) film generated in the secondary battery may be formed thinly and uniformly over the entire porous carbon-based particle structure, and thereby the lifespan characteristics of the secondary battery may be improved.

According to exemplary embodiments, the silicon element 205 may be further included in the form of silicon oxide (SiOx, 0<x<2) or silicon carbide (SiC). The silicon oxide and silicon carbide may be included in a content range which does not cause a decrease in the electrical characteristics and lifespan characteristics of the secondary battery.

According to exemplary embodiments, a content of the silicon element 205 to be included may be 30% by weight ("wt%") to 70 wt%, or 40 wt% to 60 wt% based on a total weight of the anode active material.

Within the above range, it is possible to improve the lifespan characteristics of the secondary battery, while improving the overall capacity and output performance thereof

The additional element 207 may be formed in the pores or surface of the porous carbon-based particle 200. For example, the additional element 207 may be deposited inside the structure of the porous carbon-based particle 200 to be included in the pores, or included in the form of being deposited on the surface of the porous carbon-based particle 200. For example, the additional element 207 may be included as a dopant of a composite coating to be described below.

The silicon element 205 and the additional element 207 are formed together in the porous carbon-based particle 200, such that a composite coating may be uniformly formed over the entire structure of the porous carbon-based particle 200, and thus the structural stability of the anode active material may be improved.

According to exemplary embodiments, the additional element 207 may be formed on the outer surface and the inner surface of the porous carbon-based particle 200.

In one embodiment, the inner surface content of the additional element 207 formed in the porous carbon-based particle 200 may be greater than the outer surface content. For example, 60% or more, or 70% or more based on a total weight of the additional element 207 included in the anode active material may be formed on the inner surface.

Accordingly, the additional elements may be uniformly distributed between the silicon elements, and the volume expansion of the silicon elements may be efficiently suppressed.

The additional element 207 may include at least one or more of the group consisting of group 13 elements and group 15 elements. The group 13 element and/or the group 15 element may improve the structural stability of the anode active material, while improving the conductivity of the silicon element.

According to exemplary embodiments, the group 13 element may include at least one selected from the group consisting ofB, Al, Ga, In, and Tl, or at least one selected from the group consisting of B, Al, Ga, and In.

According to exemplary embodiments, the group 15 element may include at least one selected from the group consisting ofN, P, As, Sb and Bi, or at least one selected from the group consisting ofP, As and Sb.

A content of the group 13 element or the group 15 element included in the additional element 207 may be determined based on the content of the silicon element 205.

According to exemplary embodiments, the content of the group 13 element, the content of the group 15 element, or a total content of the group 13 element and the group 15 element included in the additional element 207 may be 0.001 wt% to 4 wt% based on the content of the silicon element 205.

For example, a ratio of the silicon element 205 based on the weight may be somewhat different depending on the type of the additional element 207.

In some embodiments, the additional element 207 may include the group 13 element, and a weight ratio of the group 13 element based on the weight of silicon element 205 may be 0.01% to 4.0%, 0.01% to 2.5%, or 0.01% to 2.0%.

In some embodiments, the additional element 207 may include the group 15 element, and a weight ratio of the group 15 element based on the weight of silicon element 205 may be 0.001% to 4.0%, 0.01% to 4.0%, or 0.01% to 3.0%.

In some embodiments, the additional element 207 may include the group 13 element and the group 15 element together, and a total weight ratio of the group 13 element and the group 15 element based on the weight of the silicon element 205 may be 0.001% to 4.0%, 0.01% to 4.0%, or 0.01% to 3.5%.

Within the above range, the structural stability of the anode active material may be improved while improving the ionic conductivity of the silicon element.

For example, if the weight ratio range is less than the above range, it is not possible to improve the ionic conductivity of the silicon element. For example, if the weight ratio range is greater than the above range, the conductivity characteristics of carbon and silicon may be reduced, thereby decreasing the capacity and output characteristics of the secondary battery. In addition, a crack occurrence rate of the anode active material may be increased due to the volume expansion of the group 13 element or the group 15 element.

For example, the content of silicon element 205, the content of group 13 element or the content of group 15 element included in additional element 207, or the total content of group 13 element and the group 15 element may be values measured by a high-frequency inductively coupled plasma (TCP) analysis method of the manufactured anode active material.

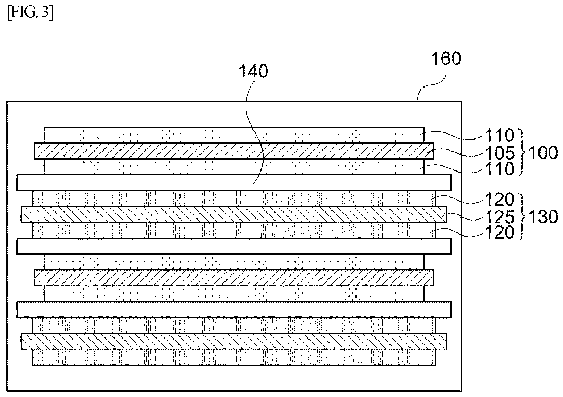

FIGS. 2 and 3 are a schematic plan view and a cross-sectional view illustrating a lithium secondary battery according to exemplary embodiments, respectively. For example, FIG. 3 is a cross-sectional view taken on line I-I' of FIG. 2 in a thickness direction of the battery.

The structure of the secondary battery shown in FIGS. 2 and 3 is schematically illustrated for the convenience of description, and the shape, the lamination structure and the number of laminated layers of electrodes are not limited as illustrated in FIGS. 2 and 3.

Referring to FIGS. 2 and 3, a lithium secondary battery may include an electrode assembly 150 including a cathode 100 and an anode 130. In some embodiments, the electrode assembly may further include a separation membrane 140 interposed between the cathode and the anode. The electrode assembly may be housed in a case 160 together with an electrolyte to be impregnated.

The cathode 100 may include a cathode active material layer 110 formed by applying a cathode active material to the cathode current collector 105. For example, a cathode slurry may be prepared by mixing and stirring the cathode active material with a binder, a conductive agent and/or a dispersant in a solvent. The cathode current collector 105 may be coated with the cathode slurry, followed by compressing and drying the same to prepare the cathode 100.

The cathode current collector 105 may include, for example, stainless steel, nickel, aluminum, titanium, copper or an alloy thereof For example, the cathode current collector 105 may include aluminum or an aluminum alloy.

The cathode active material layer 110 may include a cathode active material. The cathode active material may include a compound capable of reversibly intercalating and deintercalating lithium ions.

According to exemplary embodiments, the cathode active material may include a lithium-nickel metal oxide. The lithium-nickel metal oxide may further include at least one of cobalt (Co), manganese (Mn) and aluminum (Al).

The cathode active material may further include a coating element or a doping element. For example, the cathode active material may further include at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P or Zr as the coating element or the doping element. For example, the above-described elements may be used alone or in combination of two or more thereof as the coating element or the doping element.

Non-limiting examples of the solvent used in the preparation of the cathode slurry may include N-methyl-2-pyrrolidone (NMP), dimethylformamide, dimethylacetamide, N,N-dimethylaminopropylamine, ethylene oxide, tetrahydrofuran and the like.

The binder may include polyvinylidene fluoride (PVDF), polyvinylidene fluoride-co-hexafluoropropylene, polyacrylonitrile, polymethylmethacrylate, acrylonitrile butadiene rubber (NBR), polybutadiene rubber (BR), styrene-butadiene rubber (SBR) and the like. In one embodiment, a PVDF-based binder may be used as the cathode binder.

The conductive material may be added to enhance the conductivity of the cathode slurry layer and/or the mobility of lithium ions or electrons. For example, the conductive material may include a carbon-based conductive material such as graphite, carbon black, acetylene black, Ketjen black, graphene, carbon nanotubes (CNTs), vapor-grown carbon fibers (VGCFs), carbon fibers, and/or a metal-based conductive material including tin, tin oxide, titanium oxide, or a perovskite material such as LaSrCoO₃, and LaSrMnO₃.

As the thickener, for example, carboxymethyl cellulose (CMC) may be used.

The anode 130 may include an anode active material layer 120 formed by applying an anode slurry to an anode current collector 125. For example, the anode slurry may be prepared by dispersing the anode active material and the carbon-based active material in a solvent. The anode current collector 125 may be coated with the anode slurry, followed by drying and pressing the same to prepare the anode 130. The anode slurry may further include a binder, and optionally may further include a conductive material, a thickener or the like.

According to exemplary embodiments, the anode slurry may include the carbon-based active material and the anode active material according to the above-described embodiments. The anode active material may be an anode active material including the above-described porous carbon-based particles 200, the silicon elements 205 and the additional elements 207.

According to exemplary embodiments, the carbon-based active material may include at least one selected from the group consisting of crystalline carbon, amorphous carbon, carbon composites and carbon fibers.

Examples of the amorphous carbon may include hard carbon, soft carbon, cokes, mesocarbon microbead (MCMB), mesophase pitch-based carbon fiber (MPCF) or the like.

Examples of the crystalline carbon may include graphite-based carbon such as natural graphite, artificial graphite, graphite cokes, graphite MCMB, graphite MPCF or the like.

According to exemplary embodiments, a content of the carbon-based active material may be 70 wt% to 90 wt%, or 75 wt% to 85 wt% based on a total weight of the anode slurry.

According to exemplary embodiments, the content of the anode active material may be 10 wt% to 30 wt%, or 10 wt% to 20 wt%, based on the total weight of the anode slurry.

Within the above range, the lifespan characteristics may be improved while maintaining the electrical characteristics of the secondary battery.

According to exemplary embodiments, the anode slurry may include a conductive material and a binder as the balance.

Non-limiting examples of the solvent for the anode slurry may include water, pure water, deionized water, distilled water, ethanol, isopropanol, methanol, acetone, n-propanol, t-butanol and the like.

The above-described materials that can be used as the binder, the conductive agent and the thickener when manufacturing the cathode may be used for the anode.

In some embodiments, a styrene-butadiene rubber (SBR)-based binder, carboxymethyl cellulose (CMC), a polyacrylic acid-based binder, a poly(3,4-ethylenedioxythiophene, PEDOT)-based binder, etc. may be used as the anode binder.

A separation membrane 140 may be interposed between the cathode 100 and the anode 130. The separation membrane 140 may include a porous polymer film or a porous nonwoven fabric. The porous polymer film may include a polyolefin polymer such as an ethylene polymer, a propylene polymer, an ethylene/butene copolymer, an ethylene/hexene copolymer, and an ethylene/methacrylate copolymer, etc.

The porous nonwoven fabric may include glass fibers having a high melting point, polyethylene terephthalate fibers and the like.

The separation membrane 140 may also include a ceramic-based material. For example, inorganic particles may be applied to the polymer film or dispersed within the polymer film to improve heat resistance.

The separation membrane 140 may have a single-layer or multi-layer structure including the above-described polymer film and/or non-woven fabric.

According to exemplary embodiments, the cathode 100, the anode 130 and the separation membrane 140 may be repeatedly disposed to form an electrode assembly 150. In some embodiments, the electrode assembly 150 may have ajelly roll shape formed by winding, stacking, z-folding or stack-folding of the separation membrane.

In one embodiment, the electrode assembly 150 may be formed by repeatedly stacking the cathode 100, the anode 130, and the separation membrane 140, while the respective layers are cut or separated from each other.

For example, electrode tabs (a cathode tab and an anode tab) may protrude from the cathode current collector 105 and the anode current collector 125, respectively, and may extend to one side of the case 160. The electrode tabs may be fused together with the one side of the case and connected to electrode leads (a cathode lead 107 and an anode lead 127) extending or exposed to an outside of the case.

The electrode assembly may be housed together with the electrolyte within the case, thereby defining the lithium secondary battery. The lithium secondary battery may be manufactured as, for example, a pouch-shaped case, a square-shaped case, a cylindrical-shaped case, a coin-shaped case or the like.

According to exemplary embodiments, a non-aqueous electrolyte may be used as the electrolyte.

The non-aqueous electrolyte includes a lithium salt as an electrolyte and an organic solvent. The lithium salt is represented by, for example, Li⁺X⁻, and as an anion (X⁻) of the lithium salt, F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, etc. may be exemplified.

The organic solvent may include an organic compound which has sufficient solubility to the lithium salt and the additive, and does not have reactivity in the battery. For example, the organic solvent may include at least one of a carbonate solvent, an ester solvent, an ether solvent, a ketone solvent, an alcohol solvent and an aprotic solvent.

The non-aqueous electrolyte may further include an additive. The additive may include, for example, a cyclic carbonate compound, a fluorine-substituted carbonate compound, a sultone compound, a cyclic sulfate compound, a cyclic sulfite compound, a phosphate compound, a borate compound and the like.

In some embodiments, a solid electrolyte may be used instead of the above-described non-aqueous electrolyte. In this case, the lithium secondary battery may be manufactured in the form of an all-solid-state battery. In addition, a solid electrolyte layer may be disposed between the cathode 100 and the anode 130 instead of the above-described separation membrane.

Hereinafter, a method for manufacturing an anode active material for a lithium secondary battery according to exemplary embodiments is provided.

According to exemplary embodiments, porous carbon-based particles including pores are prepared.

In some embodiments, a resol oligomer may be manufactured by mixing an aromatic compound including a hydroxyl group and an aldehyde compound.

For example, the aromatic compound including a hydroxyl group may be phenol, and the aldehyde compound may be formaldehyde. For example, the manufactured resol oligomer may include divinylbenzene.

According to exemplary embodiments, the porous caibon-based particles may be activated. The activity of the pore structure of the porous carbon-based particles may be easily controlled through the activation.

For example, the activation may be performed by a physical activation method of conducting heat treatment at a temperature of 700°C to 1,000°C while injecting a gas having reactivity with carbon (steam, carbon dioxide, an inert gas or a mixed gas thereof).

For example, the activation may be performed by a chemical activation method which uses acidic and basic chemicals such as KOH, Na₂CO₃, NaOH, H₃PO_{4,} etc., as activators, and is performed at a lower temperature than the physical activation method.

According to exemplary embodiments, the activation may be performed for 2 hours or more, or 2 hours or more and 5 hours or less.

According to exemplary embodiments, the porous carbon-based particles manufactured through the activation may have a pore size of 20 nm or less, or 1 nm to 20 nm.

According to exemplary embodiments, the porous carbon-based particles manufactured through the activation may have a specific surface area of 100 m²/g to 2,000 m²/g, or 1,000 m²/g to 2,000 m²/g.

Within the above range, the silicon elements and the additional elements may be formed on the surface of the porous carbon-based particles in a state where a ratio of these elements is controlled.

According to exemplary embodiments, a silicon source, and at least one additional element source from the group consisting of group 13 elements and group 15 elements may be vapor-deposited on the porous carbon-based particles to form a composite coating. For example, a gas including the silicon elements and a gas including the additional elements may be injected. After the gas is injected, the silicon elements and the additional elements may be vapor-deposited by controlling the temperature and pressure and using a coater.

For example, the silicon source may include monosilane (SiH₄), disilane (Si₂H₆), trisilane (Si₃H₈), tetrasilane (Si₄H₁₀), methylsilane ((CR₃)SiR₃), dimethylsilane ((CH₃)₂SiH₂), trichlorosilane (HSiCl₃), dichlorosilane (H₂SiCl₂), etc.

For example, the group 13 element may include B, Al, Ga, In or Tl, and the additional element source including the group 13 element may include BF₃, BCl₃, B₂H₆, B₃H₈, B₄H₁₀, (CR₃)₃B, etc.

For example, the group 15 element may include N, P, As, Sb or Bi, and the additional element source including the group 15 element may include NH₃, PH₃, PF₃, POCl₃, AsH₃, AsF₃, etc.

According to exemplary embodiments, the silicon source and the additional element source may be injected together. Accordingly, the ratio of the silicon element and the additional element included in the anode active material may be efficiently controlled. In addition, the silicon elements and the additional elements may be uniformly formed in the pores and the surface of the porous carbon-based particles.

For example, when the silicon source and the additional element source are sequentially injected and calcined, a coating by the silicon elements is first formed on the surface of the porous carbon-based particles, and then the additional elements may be formed on the coating, or the additional elements may be formed only on the outer surface of the porous carbon-based particles. Accordingly, even if the contents of the elements are the same as each other, the electrical characteristics and lifespan characteristics of the secondary battery may be decreased.

According to exemplary embodiments, the silicon source and the additional element source may be injected together with an inert gas.

For example, the inert gas may include hydrogen (H₂), helium (He), neon (Ne), argon (Ar), nitrogen (N₂) or a mixed gas thereof

According to exemplary embodiments, the ratio of the elements to be injected may be somewhat different depending on the type of the elements included in the additional element source.

According to exemplary embodiments, a volume content of the additional element source may be 0.01% to 4%, or 0.1% to 2% relative to the volume of the silicon source.

In some embodiments, the additional element source may include the group 13 element, and the volume ratio of the additional element source to the volume of the silicon source may be 0.01% to 2%, or 0.1% to 1%.

In some embodiments, the additional element source may include the group 15 element, and the volume ratio of the additional element source to the volume of the silicon source may be 0.01% to 2%, or 0.1% to 2%.

In some embodiments, the additional element source may include the group 13 element and the group 15 element, and the volume ratio of the additional element source to the volume of the silicon source may be 0.01% to 2%, or 0.1% to 1.5%.

According to exemplary embodiments, the anode active material may be manufactured by depositing the silicon elements and the additional elements on the porous carbon-based particles. For example, each element may be vapor-deposited on the porous carbon-based particles by injecting the silicon source and the additional element source and then calcining the same.

According to exemplary embodiments, the silicon source and the additional element source may be deposited in a pressure range of 10 torr to 200 torr.

At the pressure range, the silicon elements and the additional elements may be uniformly formed on the porous carbon-based particles, and thereby cracks of the anode active material may be suppressed.

According to exemplary embodiments, the silicon source and the additional element source may be deposited in a temperature range of 400°C to 600°C.

Within the above temperature range, deposition may be performed to sufficiently maintain the amorphous structure of the porous carbon-based particles, and thereby the durability of the anode active material may be improved.

The embodiments of the present disclosure described above include the following aspects, and can be implemented through at least one of the following aspects.

According to the first aspect of the anode active material for a lithium secondary battery, the anode active material includes a porous carbon-based particle including pores; and a composite coating which is formed on a surface of the porous carbon-based particle, and includes a silicon element and at least one additional element from the group consisting of group 13 elements and group 15 elements, a weight ratio of the additional element to a weight of the silicon element included in the composite coating is 0.01% to 4%.

In the first aspect, according to the second aspect of the anode active material for a lithium secondary battery, a weight ratio of the silicon element to a total weight of the anode active material may be 3 0% to 70%.

In the first or the second aspect, according to the third aspect of the anode active material for a lithium secondary battery, the composite coating may include the group 13 element, and a weight ratio of the group 13 element to the weight of the silicon element may be 0.01% to 2.5% by weight.

In anyone of the first to the third aspect, according to the fourth aspect of the anode active material for a lithium secondary battery, the composite coating may include the group 15 element, and a weight ratio of the group 15 element to the weight of the silicon element may be 0.01 wt% to 4.0 wt%.

In anyone of the first to the fourth aspect, according to the fifith aspect of the anode active material for a lithium secondary battery, the group 13 element may include at least one selected from the group consisting of B, Al, Ga, In and Tl, and the group 15 element may include at least one selected from the group consisting of N, P, As, Sb and Bi.

In anyone of the first to the fifth aspect, according to the sixth aspect of the anode active material for a lithium secondary battery, the porous carbon-based particle has a specific surface area of 1,000 m²/g to 2,000 m²/g.

In anyone of the first to the sixth aspect, according to the seventh aspect of the anode active material for a lithium secondary battery, the pores included in the porous carbon-based particles have an average pore diameter of 1 nm to 20 nm.

In anyone of the first to the seventh aspect, according to the eighth aspect of the anode active material for a lithium secondary battery, the composite coating may be formed inside the pores included in the porous carbon-based particles and on an outer surface of the porous carbon-based particles.

In anyone of the first to the eighth aspect, according to the ninth aspect of the anode active material for a lithium secondary battery, the composite coating may include at least one of the group 13 elements and at least one of the group 15 elements.

In anyone of the first to the ninth aspect, according to the tenth aspect of the anode active material for a lithium secondary battery, the additional element may be included as a dopant of the composite coating.

According to the eleventh aspect of the anode for a lithium secondary battery, the anode includes an anode current collector, and an anode active material layer disposed on at least one surface of the anode current collector and including the anode active material according to the above-described aspects.

According to the twelfth aspect aspect of the lithium secondary battery, the lithium secondary battery includes the anode according to the above-described aspects; and a cathode disposed to face the anode.

According to the thirteenth aspect of the method for manufacturing an anode active material for a lithium secondary battery, porous carbon-based particles including pores are prepared. A silicon source and at least one additional element source from the group consisting of group 13 elements and group 15 elements are vapor-deposited on the porous carbon-based particles to form a composite coating. A ratio of an injection volume of the additional element source to an injection volume of the silicon source is 0.1% to 2%.

In the thirteenth aspect, according to the fourteenth aspect of the method for manufacturing an anode active material for a lithium secondary battery, the additional element source may include the group 13 element, and a volume ratio of the additional element source to the silicon source may be 0.1% to 1%.

In the thirteenth or the fourteenth aspect, according to fifteenth aspect of the method for manufacturing an anode active material for a lithium secondary battery, the additional element source may include the group 15 element, and a volume ratio of the additional element source to the silicon source may be 0.1% to 2%.

Hereinafter, experimental examples including examples and comparative examples will be described to help understand the disclosure of the above-described present application.

### Example. Preparation of anode active material (1)

### Preparation of porous carbon-based particles

Phenol and formaldehyde were mixed in a molar ratio of 1:2, and 1.5 wt% of triethylamine was added thereto, followed by performing a reaction under conditions of 85°C, 4 h, and 160 rpm (stirring), to synthesize a resol oligomer. 1 g of polyvinyl alcohol (PVA) was dispersed in a water-dispersible medium, and then added to the resol oligomer to stabilize the suspension of the resol oligomer.

Thereafter, 3 g of, hexamethylenetetramine (HMTA) as a curing agent was added to the mixture, followed by performing a reaction under conditions of 98°C, 12 h, and 400 rpm (stirring) to cure the resol oligomer. The cured resol oligomer was classified using a sieve, and then washed with water (H₂O). Unreacted monomers and oligomers were removed from the washed resol oligomer using ethanol and dried.

The dried resol oligomer was calcined at 800°C for 3 hours under a nitrogen atmosphere to prepare porous carbon-based particles. At this time, steam gas was injected to activate the porous carbon-based particles. The prepared porous carbon-based particles were adjusted to have an average pore size of 1 nm to 20 nm, and a specific surface area of 1,000 m²/g to 2,000 m²/g.

### Deposition of silicon and additional elements

A mixed gas including silane (SiH₄), argon (Ar), and an additional element (group 13 element or group 15 element) was injected into a CVD coater at a flow rate of 50 mL/min to 100 rnL/min in a pressure range of 10 torr to 200 torr and a temperature range of 400°C to 600°C, thereby allowing silicon elements and additional elements to be deposited on the porous carbon-based particles to manufacture an anode active material.

Silicon was deposited to be included in an amount of 50 wt% based on the total weight of the anode active material.

The composition of the gas including the additional element, the volume ratio of the gas including the additional element, and the weight ratio of the elements in the anode active material are shown in Table 1 below.

The weights of the silicon element and the additional element included in the anode active material were measured by inductively coupled plasma (TCP) emission spectroscopy.

Specifically, a sample of the anode active material, nitric acid, and a small amount of hydrofluoric acid were input into a polypropylene (PP) tube, and the tube was sealed by turning a stepper. The PP tube was shaken well and left at room temperature to dissolve the sample. After the sample was dissolved, the PP tube was stored in a refrigerator to cool the sample. Saturated boric acid water was added to the cooled sample to neutralize the hydrofluoric acid, and then diluted with ultrapure water. A carbon component remaining in the sample was removed with a 0.45 µm syringe filter to obtain a solution in an aerosol state.

The obtained solution was input into an ICP analyzer (NexION 350S, PerkinElmer) to measure weights of the silicon elements and the additional elements. In the ICP analyzer, a 40 MHz free-running ICP source was used as an RF generator, a Quadruple-stage vacuum system was used as a vacuum system, and a Quadruple ion detector was used as a detector.

Specifically, high-temperature (up to 10,000 K) Ar plasma was generated using an induced magnetic field (RF frequency), and mass/charge ratios of the generated cations were separated by injecting the solution in an aerosol state, and the signal intensity of each ratio was detected.

**[TABLE 1]**

| **Item** | **Additional element gas** | | **Weight ratio of elements in anode active material (Additional element gas/Si)** |
|---|---|---|---|
| | **Composition** | **Volume ratio (Additional element gas /SiH₄)** | |
| Example 1-1 | B₂H₆ | 0.001 | 0.0013 |
| Example 1-2 | | 0.002 | 0.0027 |
| Example 1-3 | | 0.005 | 0.0075 |
| Example 1-4 | | 0.01 | 0.0157 |
| Example 1-5 | | 0.02 | 0.0292 |
| Example 2-1 | PH₃ | 0.001 | 0.0020 |
| Example 2-2 | | 0.002 | 0.0045 |
| Example 2-3 | | 0.005 | 0.0124 |
| Example 2-4 | | 0.01 | 0.0212 |
| Example 2-5 | | 0.02 | 0.0395 |
| Example 3-1 | AsH₃ | 0.001 | 0.0006 |
| Example 3-2 | | 0.002 | 0.0014 |
| Example 3-3 | | 0.005 | 0.0042 |
| Example 3-4 | | 0.01 | 0.0085 |
| Example 3-5 | | 0.02 | 0.0185 |
| Example 4-1 | B₂H₆+AsH₃ (Volume ratio 1:1) | 0.001 | 0.0010 |
| Example 4-2 | | 0.002 | 0.0021 |
| Example 4-3 | | 0.005 | 0.0045 |
| Example 44 | | 0.01 | 0.0092 |
| Example 4-5 | | 0.02 | 0.0211 |
| Example 5-1 | B₂H₆+AsH₃ (Volume ratio 2:1) | 0.001 | 0.0012 |
| Example 5-2 | | 0.002 | 0.0025 |
| Example 5-3 | | 0.005 | 0.0069 |
| Example 54 | | 0.01 | 0.0146 |
| Example 5-5 | | 0.02 | 0.0287 |

### Preparation of anode

15 wt% of the anode active material manufactured according to the above example, 80.5 wt% of artificial graphite, 1 wt% of SWCNT as a conductive agent, 2 wt% of styrene-butadiene rubber (SBR) as a binder, and 1.5 wt.% of carboxymethyl cellulose (CMC) as a thickener were added to water to prepare an anode sluny.

A copper substrate was coated with the anode slurry, followed by drying and pressing the same to prepare an anode.

### Manufacture of a lithium half-cell

A lithium secondary battery including the anode prepared by the above-described method and using lithium (Li) metal as a counter electrode (cathode) was manufactured.

A polyethylene separation membrane (thickness of 20 µm) was interposed between the anode and the counter electrode. An electrode assembly including the anode/separation membrane/counter electrode was placed in a coin cell plate, an electrolyte was injected, a cap was covered, and then clamped to manufacture a lithium coin half-cell.

The electrolyte was prepared by dissolving 1 M LiPF₆ in a mixed solvent of EC/FEC/EMC/DEC (20/10/20/50; volume ratio).

Then, 3 cycles of charging and discharging at 0.1C were performed thereon (charging condition: CC-CV 0.1C 0.01 V 0.01C CUT-OFF, discharging condition: CC 0.1C 1.5 V CUT-OFF).

### Comparative Example 1. Preparation of anode active material (2)

Silicon elements were deposited in the same manner as in the above example using a mixed gas including silane (SiH₄) and argon (Ar) without including a gas containing an additional element, to prepare an anode active material (silicon deposition amount of 50 wt%). An anode and a lithium half-cell were manufactured using the anode active material in the same manner as in the above example.

### Comparative Example 2. Preparation of anode active material (3)

Petroleum pitch and dispersed silicon nanoparticles (particle size of about 50 nm) were stirred and then calcined at 800°C for 3 hours under a nitrogen atmosphere to prepare Si/C particles (silicon content of 50 wt%).

Thereafter, additional elements were deposited on the Si/C particles in the same manner as in the above example, except for using a mixed gas including argon (Ar) and a gas including an additional element, to prepare an anode active material. An anode and a lithium half-cell were manufactured using the anode active material in the same manner as in the above example.

### Comparative Example 3. Preparation of anode active material (4)

Dispersed silicon nanoparticles (particle size of about 50 nm) were used to prepare porous silicon-based secondary particles using a spray drying technique.

Thereafter, carbon elements and additional elements were deposited on the porous silicon-based secondary particles in the same manner as in the above example, except for using a mixed gas including acetylene (C₂H₂), argon (Ar), and a gas including additional elements to prepare an anode active material. An anode and a lithium half-cell were manufactured using the anode active material in the same manner as in the above example.

The weight ratios of elements in the anode active materials according to the above comparative examples are shown in Table 2 below.

**[TABLE 2]**

| **Item** | **Additional element gas** | | **Weight ratio of elements in anode active material (Additional elements/Si)** |
|---|---|---|---|
| | **Composition** | **Volume ratio (Additional element gas / C₂H₂)** | |
| Comparative example 1 | - | - (Not include additional element gas) | 0.00004 |
| Comparative example 2-1 | B₂H₆ | (Use the same volume as Example 1-3) | 0.0054 |
| Comparative example 2-2 | | (Use the same volume as Example 1-4) | 0.0104 |
| Comparative example 2-3 | AsH₃ | (Use the same volume as Example 1-3) | 0.0031 |
| Comparative example 2-4 | | (Use the same volume as Example 1-4) | 0.0065 |
| Comparative example 3-1 | B₂H₆ | 0.005 | 0.0080 |
| Comparative example 3-2 | | 0.01 | 0.0172 |
| Comparative example 3-3 | AsH₃ | 0.005 | 0.0060 |
| Comparative example 3-4 | | 0.01 | 0.0126 |

### Comparative Examples 4 to 8. Preparation of anode active material (5)

Anodes and lithium half-cells were manufactured in the same manner as in the above example, except that the volume ratios of the gas including the additional elements were changed. The volume ratios of the gas including the additional elements are shown in Table 3 below.

**[TABLE 3]**

| **Item** | **Additional element gas** | | **Weight ratio of elements in anode active material (Additional elements /Si)** |
|---|---|---|---|
| | **Composition** | **Volume ratio (Additional element gas/SiH₄)** | |
| Comparative example 4-1 | B₂H₆ | 0.05 | 0.0752 |
| Comparative example 4-2 | | 0.1 | 0.1534 |
| Comparative example 5-1 | PH₃ | 0.05 | 0.0813 |
| Comparative example 5-2 | | 0.1 | 0.1245 |
| Comparative example 6-1 | AsH₃ | 0.05 | 0.0442 |
| Comparative example 6-2 | | 0.1 | 0.0811 |
| Comparative example 7-1 | B₂H₆+AsH₃ (Volume ratio 1:1) | 0.05 | 0.0545 |
| Comparative example 7-2 | | 0.1 | 0.0979 |
| Comparative example 8-1 | B₂H₆+AsH₃ (Volume ratio 2:1) | 0.05 | 0.0714 |
| Comparative example 8-2 | | 0.1 | 0.1134 |

### Experimental example. Evaluation of battery characteristic

### (1) Evaluation of anode thickness expansion rate

After performing charging (CC/CV 0.1C 0.01 V 0.01C CUT-OFF) on the lithium secondary batteries manufactured according to the above-described examples and comparative examples, an expansion rate was evaluated by converting an increase rate of the anode thickness after charging to an initial anode thickness into a percentage.

### (2) Evaluation of capacity characteristics

After performing charging (CC-CV 0.1C 0.01 V 0.01C CUT-OFF) on the lithium secondary batteries manufactured according to the above-described examples and comparative examples in a 25°C chamber, a battery capacity (initial charge capacity) was measured, and performing discharging (CC 0.1C 1.5 V CUT-OFF) again thereon, then the battery capacity (initial discharge capacity) was measured.

### 3) Evaluation of lifespan characteristics

The lithium secondary batteries according to the examples and comparative examples were repeatedly charged ((CC/CV 0.1C 0.01 V0.01C CUT-OFF) and discharged (CC 0.1C 1.5V CUT-OFF) 100 times, then the capacity retention rate was evaluated as a percentage of the discharge capacity at 100 times divided by the discharge capacity at one time.

In each experimental example, measurement results according to the examples are shown in Table 4, and measurement results according to the comparative examples are shown in Table 5.

**[TABLE 4]**

| **Item** | **Element content ratio** | **Thickness expansion rate (%)** | **Initial capacity (mAh/g)** | **Capacity retention rate (100 Cycle, %)** |
|---|---|---|---|---|
| Example 1-1 | 0.0013 | 45 | 1860 | 90 |
| Example 1-2 | 0.0027 | 44 | 1858 | 91 |
| Example 1-3 | 0.0075 | 42 | 1851 | 93 |
| Example 1-4 | 0.0157 | 43 | 1794 | 89 |
| Example 1-5 | 0.0292 | 42 | 1643 | 84 |
| Example 2-1 | 0.0020 | 44 | 1862 | 90 |
| Example 2-2 | 0.0045 | 43 | 1859 | 92 |
| Example 2-3 | 0.0124 | 42 | 1853 | 93 |
| Example 24 | 0.0212 | 42 | 1821 | 91 |
| Example 2-5 | 0.0395 | 43 | 1812 | 86 |
| Example 3-1 | 0.0006 | 45 | 1855 | 91 |
| Example 3-2 | 0.0014 | 45 | 1880 | 92 |
| Example 3-3 | 0.0042 | 44 | 1820 | 93 |
| Example 3-4 | 0.0085 | 43 | 1812 | 94 |
| Example 3-5 | 0.0185 | 44 | 1765 | 90 |
| Example 4-1 | 0.0010 | 43 | 1855 | 91 |
| Example 4-2 | 0.0021 | 43 | 1880 | 92 |
| Example 4-3 | 0.0045 | 42 | 1864 | 93 |
| Example 44 | 0.0092 | 42 | 1780 | 93 |
| Example 4-5 | 0.0211 | 43 | 1692 | 91 |
| Example 5-1 | 0.0012 | 45 | 1854 | 91 |
| Example 5-2 | 0.0025 | 44 | 1853 | 93 |
| Example 5-3 | 0.0069 | 41 | 1820 | 94 |
| Example 54 | 0.0146 | 42 | 1786 | 93 |
| Example 5-5 | 0.0287 | 44 | 1688 | 90 |

**[TABLE 5]**

| **Item** | **Element content ratio** | **Thickness expansion rate (%)** | **Initial capacity (mAh/g)** | **Capacity retention rate (100 Cycle, %)** |
|---|---|---|---|---|
| Comparative example 1 | 0.00004 | 51 | 1852 | 85 |
| Comparative example 2-1 | 0.0054 | 55 | 1560 | 85 |
| Comparative example 2-2 | 0.0104 | 54 | 1545 | 84 |
| Comparative example 2-3 | 0.0031 | 58 | 1580 | 86 |
| Comparative example 24 | 0.0065 | 58 | 1557 | 87 |
| Comparative example 3-1 | 0.0080 | 47 | 1561 | 86 |
| Comparative example 3-2 | 0.0172 | 48 | 1543 | 86 |
| Comparative example 3-3 | 0.0060 | 46 | 1601 | 83 |
| Comparative example 34 | 0.0126 | 46 | 1542 | 81 |
| Comparative example 4-1 | 0.0752 | 48 | 1600 | 84 |
| Comparative example 4-2 | 0.1534 | 49 | 1532 | 83 |
| Comparative example 5-1 | 0.0813 | 47 | 1672 | 83 |
| Comparative example 5-2 | 0.1245 | 48 | 1530 | 79 |
| Comparative example 6-1 | 0.0442 | 48 | 1683 | 82 |
| Comparative example 6-2 | 0.0811 | 47 | 1520 | 78 |
| Comparative example 7-1 | 0.0545 | 48 | 1642 | 85 |
| Comparative example 7-2 | 0.0979 | 49 | 1534 | 85 |
| Comparative example 8-1 | 0.0714 | 48 | 1627 | 85 |
| Comparative example 8-2 | 0.1134 | 48 | 1546 | 84 |

Referring to Table 4, in Examples 1-1 to 1-4 which include the silicon elements and the group 13 elements, the thickness expansion rate of the secondary battery was significantly reduced compared to Comparative Example 1 which does not include the additional elements, the initial capacity was improved or maintained at the same level, and the capacity retention rate was improved.

In Example 1-5 in which the weight ratio of the group 13 elements to the weight of the silicon elements exceeded 0.025, the thickness expansion rate of the secondary battery was reduced compared to Comparative Example 1, but the initial capacity and the capacity retention rate were somewhat decreased.

In Examples 2-1 to 2-5 and Examples 3-1 to 3-5 which include the silicon elements and the group 15 elements, the thickness expansion rate of the secondary battery was significantly reduced compared to Comparative Example 1, the initial capacity was improved or maintained at the same level, and the capacity retention rate was improved.

In Examples 4-1 to 4-5 and Examples 5-1 to 5-5 which include the silicon elements, the group 13 elements and the group 15 elements, the thickness expansion rate of the secondary battery was significantly reduced compared to Comparative Example 1, the initial capacity was improved or maintained at the same level, and the capacity retention rate was improved.

In Comparative Example 2 in which the silicon element was not deposited or Comparative Example 3 in which carbon was deposited on the porous silicon-based secondary particles, the thickness expansion rate, the initial capacity, and the capacity retention rate characteristics of the secondary battery were significantly decreased regardless of the type of additional element and the weight ratio of the additional element to the silicon included in the anode active material.

In Comparative Examples 4 to 8 in which the weight ratio of the additional element to the weight of the silicon element exceeded 0.04, all the thickness expansion rate, the initial capacity, and the capacity retention rate characteristics of the secondary battery were decreased compared to Comparative Example 1.

## Claims

1. An anode active material for a lithium secondary battery comprising:
a porous carbon-based particle including pores; and
a composite coating which is formed on a surface of the porous carbon-based particle, and comprises a silicon element and at least one additional element from the group consisting of group 13 elements and group 15 elements,
wherein a weight ratio of the additional element to a weight of the silicon element included in the composite coating is 0.01% to 4%.

2. The anode active material for a lithium secondary battery according to claim 1, wherein a weight ratio of the silicon element to a total weight of the anode active material is 30% to 70%.

3. The anode active material for a lithium secondary battery according to claims 1 or 2, wherein the composite coating comprises the group 13 element, and a weight ratio of the group 13 element to the weight of the silicon element is 0.01% to 2.5% by weight.

4. The anode active material for a lithium secondary battery according to anyone of claims 1 to 3, wherein the composite coating comprises the group 15 element, and a weight ratio of the group 15 element to the weight of the silicon element is 0.01 wt% to 4.0 wt%.

5. The anode active material for a lithium secondary battery according to anyone of claims 1 to 4, wherein the group 13 element comprises at least one selected from the group consisting of B, Al, Ga, In and Tl, and the group 15 element comprises at least one selected from the group consisting ofN, P, As, Sb and Bi.

6. The anode active material for a lithium secondary battery according to anyone of claims 1 to 5, wherein the porous carbon-based particle has a specific surface area of 1,000 m²/g to 2,000 m²/g.

7. The anode active material for a lithium secondary battery according to anyone of claims 1 to 6, wherein the pores included in the porous carbon-based particles have an average pore diameter of 1 nm to 20 nm.

8. The anode active material for a lithium secondary battery according to anyone of claim 1s to 7, wherein the composite coating is formed inside the pores included in the porous carbon-based particles and on an outer surface of the porous carbon-based particles.

9. The anode active material for a lithium secondary battery according to anyone of claims 1 to 8, wherein the composite coating comprises at least one of the group 13 elements and at least one of the group 15 elements.

10. The anode active material for a lithium secondary battery according to anyone of claims 1 to 9, wherein the additional element is included as a dopant of the composite coating.

11. An anode for a lithium secondary battery, comprising:
an anode current collector; and
an anode active material layer disposed on at least one surface of the anode current collector and comprising the anode active material for a lithium secondary battery according to anyone of claims 1 to 10.

12. A lithium secondary battery, comprising:
the anode for a lithium secondary battery according to claim 11; and
a cathode disposed to face the anode.

13. A method for manufacturing an anode active material for a lithium secondary battery, the method comprising:
preparing porous carbon-based particles including pores; and
vapor-depositing a silicon source and at least one additional element source from the group consisting of group 13 elements and group 15 elements on the porous carbon-based particles to form a composite coating
wherein a ratio of an injection volume of the additional element source to an injection volume of the silicon source is 0.1% to 2%.

14. The method according to claim 13, wherein the additional element source comprises the group 13 element, and a volume ratio of the additional element source to the silicon source is 0.1% to 1%.

15. The method according to claims 13 or 14, wherein the additional element source comprises the group 15 element, and a volume ratio of the additional element source to the silicon source is 0.1% to 2%.
